# EUROPEAN PATENT APPLICATION

(11) **EP 2 998 692 A1**
(43) Date of publication of application: **23.03.2016**
(21) Application number: 14200540.4
(22) Date of filing: 30.12.2014
(51) Int. Cl.: G01B 11/06

(54) **Three dimensional angle measuring device**

(30) Priority: 22.09.2014 CN 201410487585
(71) Applicant: Zhejiang Rongsheng Tool Co., Ltd, Jinhua Zhejiang (CN)
(72) Inventor: Zhuang, Chengrong, Jinhua (CN)
(74) Representative: Sun, Yiming

(57) **Abstract**

The invention disclosed a three dimensional angle measuring device for measuring and correcting horizontal, vertical and other angle states of an object. The invention includes a housing, a key module, a power module, a display module, an information processing module, a buzzing module and a sensor module, wherein the power module is connected with the information processing module and the key module, the information processing module is connected with the key module, the display module, the information processing module, the buzzing module and the sensor module. The invention has characteristics of high measurement precision, easy operation and more functions. When in use, it just needs to place the invention on a test plane, then the present angle can be displayed precisely, and the precision can reach ±0.10°; the invention also has functions such as calibration, locking, resetting and calculator, thus avoiding daily tedious operation.

## Description

### Field of the Invention

The invention belongs to the field of measuring tools and technology, relates to a three dimensional angle measuring device for measuring and correcting horizontal, vertical and other angle state with high precision.

### Background

It is needed to measure and correct horizontal, vertical and other angle states of an object during operation processes such as house decoration, maintenance, item installation, etc., the existing pointer-type angle measuring device mostly relies on reading by naked eyes, and it needs time to analyze in the work requiring higher precision, and there are greater measurement errors, which brings inconvenience to the work.

### Summary

Aiming at existing inconvenience brought by reading the pointer by naked eyes, the invention provides a liquid crystal digital display device with high precision. It just needs to place the device on a test plane, then the present angle can be displayed precisely, and the precision can reach ±0.10°; the invention also has functions such as calibration, locking, resetting and calculator in the function test, thus avoiding daily tedious operation.

The technical scheme adopted in the invention is achieved as follows: a three dimensional angle measuring device, includes a housing, a key module, a power module, a display module, an information processing module, a buzzing module and a sensor module, wherein the power module is connected with the information processing module and the key module, the information processing module is connected with the key module, the display module, the information processing module, the buzzing module and the sensor module.

Further, the power module includes a relay, a voltage regulator module and a power circuit.

Further, the key module includes angle measurement function keys, calculator keys and a keying circuit.

In the three dimensional angle measuring device, two horizontal datum planes are set on the housing, wherein, a first horizontal datum plane is on the left side of the housing, and a second horizontal datum plane is on the back of the housing.

Further, in the one three dimensional angle measuring device, the angle measurement function keys and the calculator keys are conductive keys.

Further, the display module includes a first liquid crystal display window, a second liquid crystal display window, a display module circuit, a first liquid crystal display drive integrated chip and a second liquid crystal display drive integrated chip.

Further, the buzzing module includes a buzzer and a buzzing module circuit.

Further, the sensor module includes a sensor module circuit and a sensor chip.

In the three dimensional angle measuring device, the information processing module includes a microcontroller U₃ and a control circuit, wherein the control circuit includes a crystal oscillator Y, a switch K, a resistor 3 R₃, a resistor 4 R₄, a resistor 5 R₅, a resistor 6 R₆, a capacitor 6 C₆, a capacitor 7 C₇, a capacitor 8 C₈, a capacitor 9 C₉, a capacitor 14 C₁₄, a capacitor 15 C₁₅, a capacitor 16 C₁₆ and a capacitor 17 C₁₇, wherein one end of the switch K and one end of the capacitor 9 C₉ are connected with the anode output VDD of the circuit, the other end of the capacitor 9 C₉ is connected with the power cathode GND of the circuit, and the other end of the switch K is connected with the pin 1 of the microcontroller U₃. One end of the resistor 5 R₅ is connected with the anode input VBAT in the circuit, the other end of the resistor 5 R₅ is connected with one end of the resistor 6 R₆ and the pin 2 of the microcontroller U₃, and the other end of the resistor 6 R₆ is connected to the cathode node AGND of the circuit. The pin 14 of the microcontroller U₃ and one end of the resistor 6 R₆ are connected to the anode output VDD of the circuit, and the other end of the resistor 6 R₆ is connected with the pin 15 of the microcontroller U₃ and the cathode node AGND of the circuit; the pin 17 of the microcontroller U₃ is respectively connected with one end of the capacitor 14 C₁₄ and one end of the crystal oscillator Y, and the other end of the capacitor 14 C₁₄ is connected to the power cathode GND in the circuit. The pin 18 of the microcontroller U₃ is respectively connected with one end of the capacitor 15 C₁₅ and the other end of the crystal oscillator Y, the other end of the capacitor 15 C₁₅ is connected to the power cathode GND of the circuit, and the pin 21 of the microcontroller U₃ is connected with one end of the resistor 3 R₃, the other end of the resistor 3 R₃ is connected to the power cathode GND of the circuit. The pin 23 of the microcontroller U₃ is respectively connected with one end of the resistor 4 R₄ and one end of the capacitor 16 C₁₆, the other end of the resistor 4 R₄ and one end of the capacitor 17 C₁₇ are connected to the anode output VDD of the circuit, the other end of the capacitor 17 C₁₇ is connected to the power cathode GND of the circuit, and the other end of the capacitor 16 C₁₆ is connected with the pin 26 of the microcontroller U₃.The pin 32 of the microcontroller U₃ and one end of the capacitor 7 C₇ are connected with the anode output VDD of the circuit, and the other end of the capacitor 7 C₇ is connected with the power cathode GND of the circuit. The pin 48 of the microcontroller U₃ and one end of the capacitor 8 C₈ are connected with the anode output VDD of the circuit, and the other end of the capacitor 8 C₈ is connected with the power cathode GND of the circuit.

In the three dimensional angle measuring device, the power module includes a relay, a voltage regulator module U₁ and a power circuit, wherein the power circuit includes a capacitor1 C₁, a capacitor 2 C₂, a capacitor 3 C₃, a capacitor 4 C₄, a capacitor 5 C₅, a voltage regulator module U₁, a resistor 1 R₁, a resistor 2 R₂, a triode 1 Q₁ and a triode 2 Q₂, wherein the triode 1 Q₁ is a MOS tube, and the capacitor1 C₁, the capacitor 4 C₄ and the capacitor 5 C₅ are electrolytic capacitors. The anode input VBAT node in the circuit is connected with the pin 1 of the relay J, the anode of the capacitor1 C₁, one end of the capacitor 2 C₂ and the pins 1 and 3 of the voltage regulator module U₁. The cathode GND of the circuit is connected with the pin 2 of the relay J, the other end of the capacitor1 C₁, the other end of the capacitor 2 C₂, the pin 2 of the voltage regulator module U₁, one end of the capacitor 3 C₃ and the cathode of the capacitor 4 C₄. The anode output VDD of the circuit is connected with the pin 5 of the voltage regulator module U₁, the other end of the capacitor 3 C₃, the anode of the capacitor 4 C₄, one end of the resistor 1 R₁ and a source electrode of the triode 1 Q₁. The other end of the resistor 1 R₁ is connected with a grid of the triode 1 Q₁ and a collector electrode of the triode 2 Q₂, a drain electrode of the triode 1 Q₁ is connected with the anode output VCC of the circuit and the anode of the capacitor 5 C₅, the cathode of the capacitor 5 C₅ is grounded, and a base electrode of the triode 2 Q₂ is connected with one end of the resistor 2 R₂, an emitter electrode of the triode 2 Q₂ is connected to the cathode GND of the circuit, and the other end of the resistor 2 R₂ is connected to the pin 3 of the microcontroller U₃.

In the three dimensional angle measuring device, the key module includes angle measurement function keys, calculator keys and a keying circuit, wherein the total number of the angle measurement function keys and the calculator keys are 26, including: key 1 SW₁-key 26 SW₂₆. The keying circuit are as follows: key 1 SW₁-key 26 SW₂₆ are arranged in a matrix form, wherein, ordered in row, one pin of key 1 SW₁-key 5 SW₅ are connected to a network KS0₁, one pin of key 6 SW₆-key 10 SW₁₀ are connected to a network KS0₂, one pin of key 11 SW₁₁-key 15 SW₁₅ are connected to a network KS0₃, one pin of key 16 SW₁₆-key 20 SW₂₀ are connected to a network KS0₄, one pin of key 21 SW₂₁-key 25 SW₂₅ are connected to a network KS0₅, and one pin of key 26 SW₂₆ is connected to a network KS0₆; and ordered in line, the other pin of key 1 SW₁, key 6 SW₆, key 11 SW₁₁, key 16 SW₁₆, key 21 SW₂₁ and key 26 SW₂₆ are connected to a network KS₁₁, the other pin of key 2 SW₂, key 7 SW₇, key 12 SW₁₂, key 17 SW₁₇ and key 22 SW₂₂ are connected to a network KS₁₂, the other pin of key 3 SW₃, key 8 SW₈, key 13 SW₁₃, key 18 SW₁₈ and key 23 SW₂₃ are connected to a network KS₁₃, the other pin of key 4 SW₄, key 9 SW₉, key 14 SW₁₄, key 19 SW₁₉ and key 24 SW₂₄ are connected to a network KS₁₄, and the other pin of key 5 SW₅, key 10 SW₁₀, key 15 SW₁₅, key 20 SW₂₀ and key 25 SW₂₅ are connected to a network KS₁₅. Networks KS₁₁-KS₁₅ are sequentially connected to the pins 4, 5, 6, 7 and 8 of the microcontroller U₃, respectively. Networks KS₀₁-KS₁₅ are sequentially connected to the pins 4, 5, 6, 7 and 8 of the microcontroller U₃, respectively; and networks KS01-KS06 are respectively connected to the pins 9, 10, 11, 12, 13 and 16 of the microcontroller U₃.

In the three dimensional angle measuring device, the sensor module includes a sensor chip U₂ and a sensor module circuit, wherein the sensor module circuit are as follows: pins 1 and 10 of the sensor chip U₂ are connected to the power anode output VCC, the pin 3 of the sensor chip U₂ is connected to the pin 55 of the microcontroller U₃, pins 4, 7 and 9 of the sensor chip U₂ are connected to the power cathode GND of the circuit, and the pin 5 of the sensor chip U₂ is connected to the pin 54 of the microcontroller U₃, the pin 6 of the sensor chip

U₂ is connected to the pin 53 of the microcontroller U₃, and the pin 8 of the sensor chip U₂ is connected to the pin 19 of the microcontroller U₃.

Further, the sensor chip U₂ is a three-axis angle sensor.

In the three dimensional angle measuring device, the display module includes a liquid crystal display LCD, a first liquid crystal display drive integrated chip U₄, a second liquid crystal display drive integrated chip U₅ and a display module circuit, wherein the liquid crystal display LCD includes a first liquid crystal display window and a second liquid crystal display window, the display module circuit includes a capacitor 10 C₁₀, a capacitor 11 C₁₁, a capacitor 12 C₁₂ and a capacitor 13 C₁₃. Wherein, pins 1-4 of the liquid crystal display LCD are respectively connected to pins 37, 36, 35 and 34 of the microcontroller U₃, the pin 5 of the liquid crystal display LCD is connected to one end of the capacitor 11 C₁₁ and the power cathode GND in the circuit. The pin 6 of the liquid crystal display LCD is connected to the other end of the capacitor 11 C₁₁ and the power anode output VCC, pins 7-10 of the liquid crystal display LCD are respectively connected to pins 64, 63, 62 and 61 of the microcontroller U₃, the pin 15 of the liquid crystal display LCD is connected to the anode input VBAT node, pins 16-18 of the liquid crystal display LCD are respectively connected to pins 6, 5 and 4 of the first liquid crystal display drive integrated chip U₄, pins 6 and 5 of the second liquid crystal display drive integrated chip U₅ are respectively connected to pins 19 and 20 of the liquid crystal display LCD. The pin 22 of the liquid crystal display LCD is connected to the pin 33 of the microcontroller U₃, pins 23-30 of the liquid crystal display LCD are respectively connected to pins 46, 45, 44, 43, 42, 41, 40 and 39 of the microcontroller U₃, the pin 31 of the liquid crystal display LCD is respectively connected to the pin 60 of the microcontroller U₃, the pin 32 of the liquid crystal display LCD is connected to the power anode output VCC, the pin 33 of the liquid crystal display LCD and one end of the capacitor 13 C₁₃, the other end of the capacitor 13 C₁₃ is connected to the power cathode GND of the circuit and the pin 34 of the liquid crystal display LCD, and pins 35, 36 and 37 of the liquid crystal display LCD are respectively connected to pins 29, 30 and 31 of the microcontroller U₃. One end of the capacitor 10 C₁₀ is connected to the power anode output VCC and the pin 1 of the first liquid crystal display drive integrated chip U₄, the other end of capacitor 10 C₁₀ is connected to the power cathode GND of the circuit and the pin 2 of the first liquid crystal display drive integrated chip U₄, the pin 3 of the first liquid crystal display drive integrated chip U₄ is connected to the pin 3 of the second liquid crystal display drive integrated chip U₅ and the pin 59 of the microcontroller U₃. One end of the capacitor 12 C₁₂ is connected to the power anode output VCC and the pin 1 of the second liquid crystal display drive integrated chip U₅, and the other end of the capacitor 12 C₁₂ is connected to the power cathode GND of the circuit and the pin 2 of the second liquid crystal display drive integrated chip U₅.

In the three dimensional angle measuring device, the buzzing module includes a buzzer DZ and a buzzing module circuit, wherein the buzzing module circuit includes a triode 3 Q₃ and a resistor 7 R₇, wherein, one end of the buzzer DZ is connected to the anode input VBAT node, the other end of the buzzer DZ is connected to the collector electrode of the triode 3 Q₃, the emitter electrode of the triode 3 Q₃ is connected to the power cathode GND of the circuit, the base electrode of the triode 3 Q₃ is connected to one end of the resistor 7 R₇, and the other end of the resistor 7 R₇ is connected to the pin 52 of the microcontroller U₃.

Compared to the existing pointer-type angle measuring device, a three dimensional angle measuring device of the invention has characteristics of high measurement precision, easy operation and more functions.

### Brief Description of the Drawings

Fig. 1 is an appearance representation of the three dimensional angle measuring device of the invention.
Fig. 2 is a structural representation of the three dimensional angle measuring device of the invention.
Fig. 3 is a schematic diagram of measurement when the first horizontal datum plane of the three dimensional angle measuring device of the invention is upward.
Fig. 4 is a schematic diagram of measurement when the second horizontal datum plane of the three dimensional angle measuring device of the invention is upward.
Fig. 5 is a schematic diagram of the display interface of the first liquid crystal display window when the first horizontal datum plane of the three dimensional angle measuring device of the invention is upward.
Fig. 6 is a schematic diagram of the display interface of the first liquid crystal display window when the second horizontal datum plane of the three dimensional angle measuring device of the invention is upward.
Fig. 7 is a block diagram of the circuit of the three dimensional angle measuring device of the invention.
Fig. 8 is a diagram of the control circuit in the circuit of the three dimensional angle measuring device.
Fig. 9 is a diagram of the power circuit in the circuit of the three dimensional angle measuring device.
Fig. 10 is a diagram of the keying circuit in the circuit of the three dimensional angle measuring device.
Fig. 11 is a diagram of the sensor module circuit in the circuit of the three dimensional angle measuring device.
Fig. 12 is a diagram of the display module circuit in the circuit of the three dimensional angle measuring device.
Fig. 13 is a diagram of the buzzing module circuit in the circuit of the three dimensional angle measuring device.

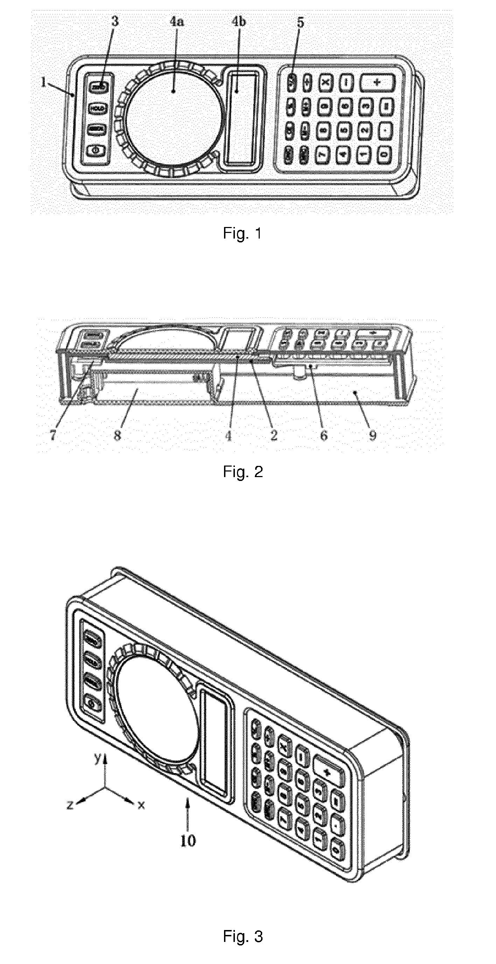

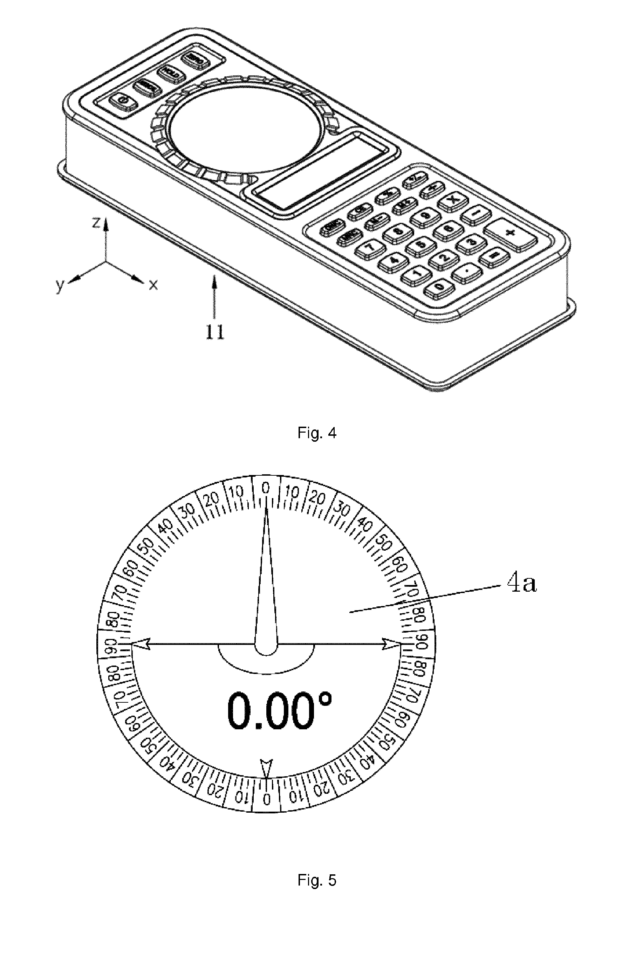

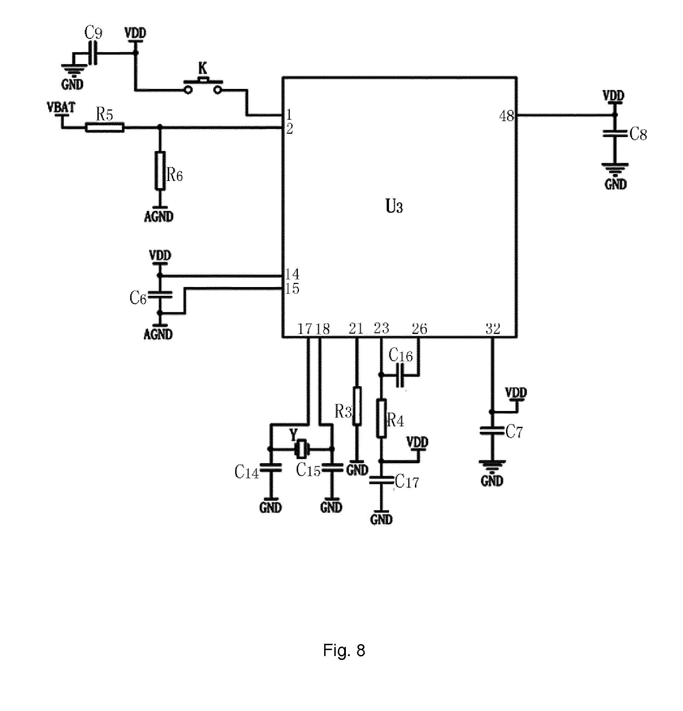

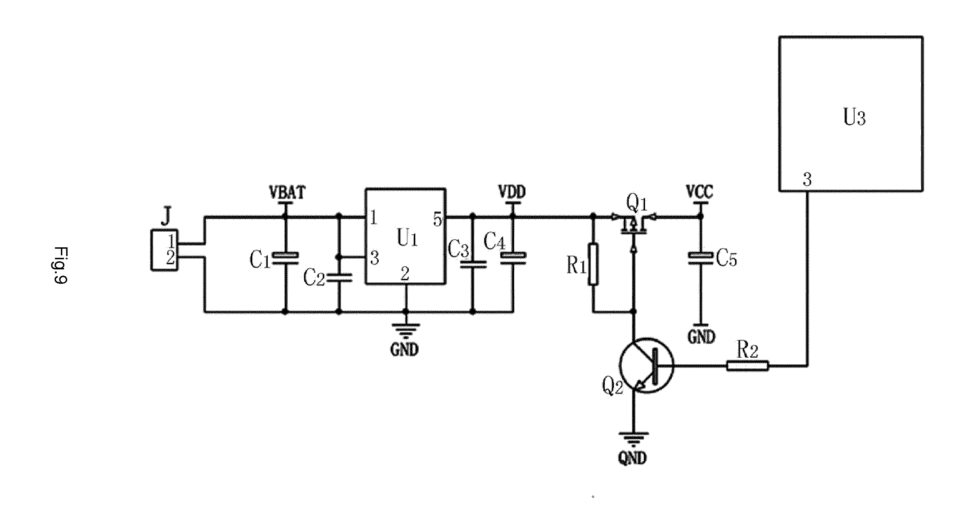

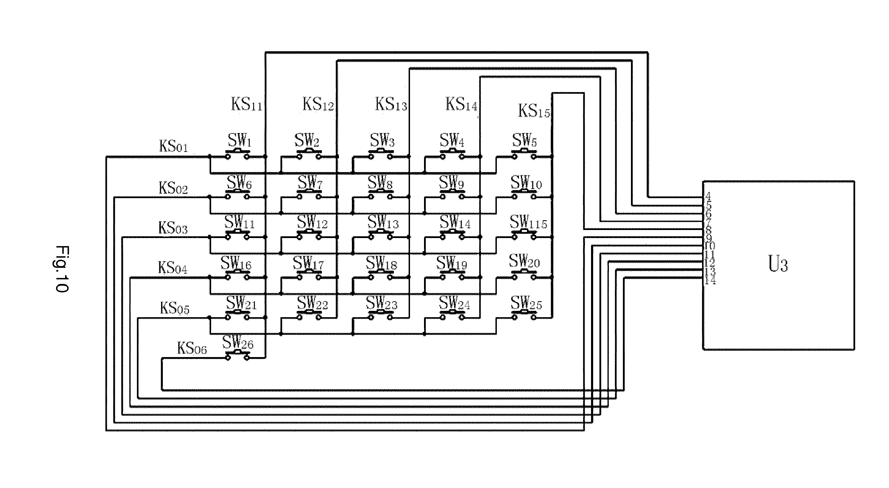

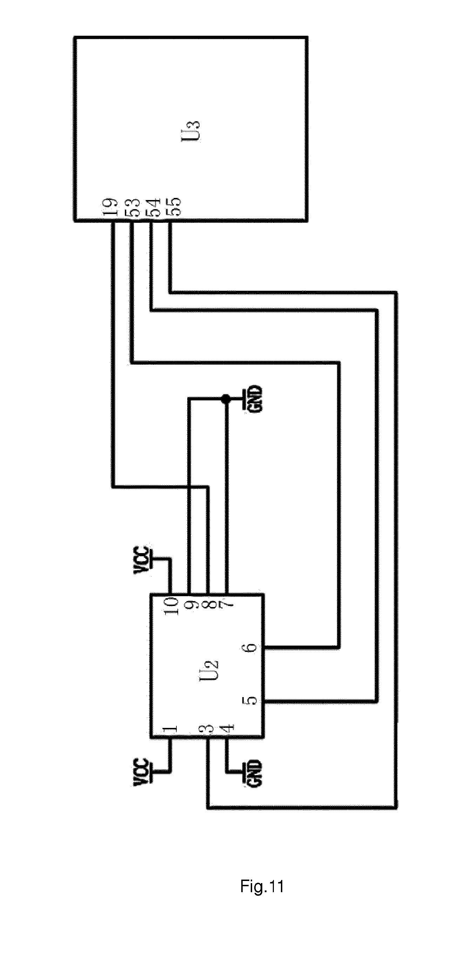

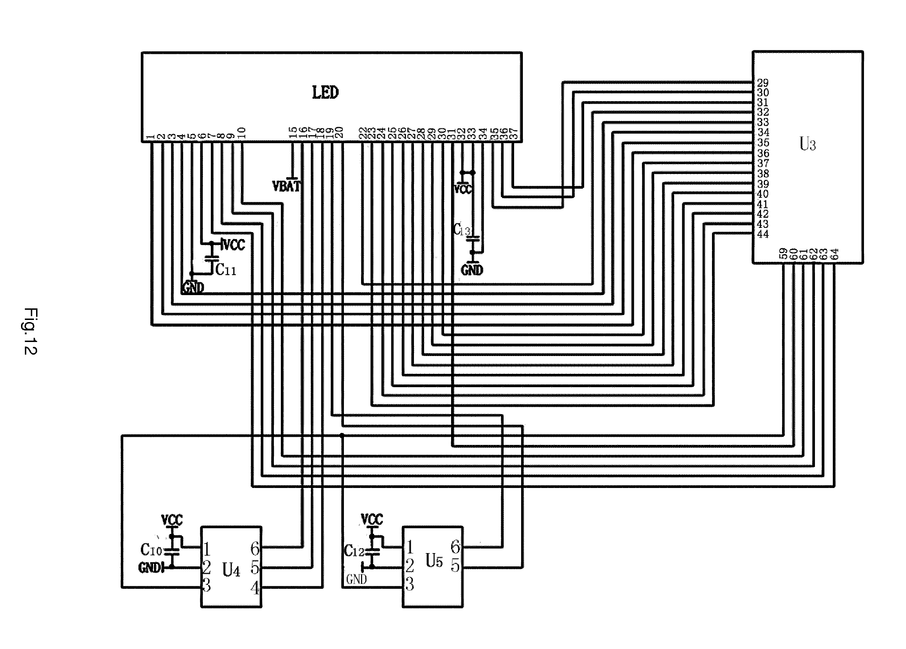

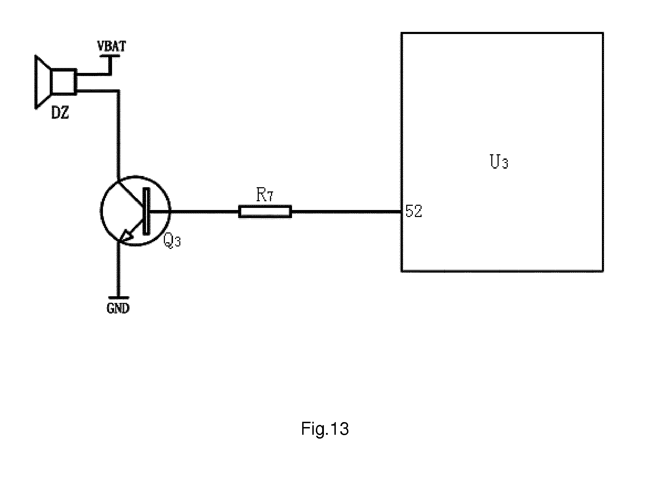

In Fig. 1-Fig. 13, 1: front cover; 2: liquid crystal display fixing base; 3: angle measurement function keys; 4: liquid crystal display; 4a: first liquid crystal display window; 4b: second liquid crystal display window; 5: calculator keys; 6: first circuit board; 6a: control circuit; 6b: power circuit; 6c: keying circuit; 6d: sensor module circuit; 6e: display module circuit; 6f: buzzing module circuit; 7: second circuit board; 8: battery box; 9: a rear cover; 10: first horizontal datum plane; and 11: second horizontal datum plane.

U₁: voltage regulator module; U₂: sensor chip; U₃: microcontroller; U₄: liquid crystal display drive integrated chip 1; U₅: liquid crystal display drive integrated chip 2; Y: crystal oscillator; K: switch; Q₁-Q₃ : triode 1-triode 3; J: relay; LCD: liquid crystal display; DZ: buzzer;R₁-R₇: resistor 1-resistor 7;; C₁-C₁₇: capacitor 1-capacitor17; SW₁-SW₂₆: key 1-key 26.

### Detailed Description of the Invention

By reference to drawings, the invention will be further described by examples.

Referring to Fig. 1-Fig. 6, a three dimensional angle measuring device, includes a housing, angle measurement function keys 3, a liquid crystal display 4, calculator keys 5 and circuit boards of the electronic circuit, wherein, the housing consists of a front cover 1 and a rear cover 9, a first liquid crystal display window 4a and a second liquid crystal display window 4b are set on the front cover 1. The first liquid crystal display window 4a is used for displaying inclination angle state of an object to be measured, and the second liquid crystal display window 4b is used for displaying calculation result of the calculator. Circuit boards of the electronic circuit include a first circuit board 6 and a second circuit board 7.The first circuit board 6 and the second circuit board 7 are fixed on the front cover 1, and the second circuit board 7 is connected with the first circuit board 6 by a lead. The liquid crystal display 4 is fixed on the front cover 1 through the liquid crystal display fixing base 2 and connected with the first circuit board 6 by a lead. The calculator keys 5 are set on the first circuit board 6 and connected with the circuit of the first circuit board 6. The angle measurement function keys 3 are set on the second circuit board 7 and connected with the circuit of the second circuit board 7. Two horizontal datum planes are set on the housing, wherein, the first horizontal datum plane 10 is on the left side of the housing, and the second horizontal datum plane 11 is on the back of the housing. The angle measurement function keys 3 and the calculator keys 5 are conductive keys.

Wherein, the angle measurement function keys 3, the calculator keys 5 and the keying circuit 6c constitute the key module of the three dimensional angle measuring device. The relay J, the voltage regulator module U₁ and the power circuit 6b constitute the power module of the three dimensional angle measuring device. The liquid crystal display window 4a, the second liquid crystal display window 4b, the display module circuit 6e, the first liquid crystal display drive integrated chip U₄ and the second liquid crystal display drive integrated chip U₅ constitute the display module of the three dimensional angle measuring device; the microcontroller U₃ and the control circuit 6a constitute the information processing module of the three dimensional angle measuring device. The buzzer DZ and the buzzing module circuit 6f constitute the buzzing module of the three dimensional angle measuring device; and the sensor module circuit 6d and the sensor chip U₂ constitute the sensor module of the three dimensional angle measuring device.

When the first horizontal datum plane 10 of the three dimensional angle measuring device is downward, angle state of the object in Z axis can be measured; when the second horizontal datum plane 11 of the three dimensional angle measuring device is downward, angle states of the object in X and Y axes can be measured.

When the first horizontal datum plane 10 of the three dimensional angle measuring device is downward, the first liquid crystal display window 4a on the front cover 1 displays the inclination state of the first horizontal datum plane 10 of the three dimensional angle measuring device around the Z axis. When the first horizontal datum plane 10 of the three dimensional angle measuring device has different inclination angle, the interface scale and reading value will incline along with the first horizontal datum plane 10, while the pointer and the semicircle representing the level bubble as well as three small arrows always keep the space position unchanged, now the scale pointed to by the pointer is the inclination angle of the first horizontal datum plane 10.

When the second horizontal datum plane 11 of the three dimensional angle measuring device is downward, the first liquid crystal display window 4a on the front cover 1 displays the inclination state of the second horizontal datum plane 10 of the three dimensional angle measuring device around the X and Y axes. When the X and Y axes alone or both have different inclination angles, the interface scale and the central cross coordinate of the first liquid crystal display window 4a keep still, while the central dot and two concentric circles representing the universal level bubble as well as the reference cross curve taking the dot center as the coordinate and the arrow indicating the inclination direction move along the inclination direction of the second horizontal datum plane, the direction pointed to by the arrow is the peak of the inclination angle, and the precise value of the inclination angle is displayed on the arrow.

The angle measurement function keys 3 set on the three dimensional angle measuring device has functions of startup and shutdown, self-calibration of measurement datum, keeping measurement values and absolute measurement (taking inclined plane of the object as 0° datum).

When in use, the three dimensional angle measuring device enters the working state immediately after the power switch is turn on. When only the inclination angle of the object in one direction needs to be measured, the first horizontal datum plane 10 of the three dimensional angle measuring device is placed downwards on the plane to be measured, now the first liquid crystal display window 4a displays the angle pointed to by the pointer and the displayed value is the inclination angle of the measured object relative to the horizontal plane. When the inclination angles of the object in two directions need to be measured, the second horizontal datum plane 11 of the three dimensional angle measuring device is placed downwards on the plane to be measured, now the first liquid crystal display window 4a displays direction of movement of the universal level bubble, the direction pointed to by the arrow is the inclination direction of the measured object relative to the horizontal plane, and inclination value is also displayed ahead of the arrow.

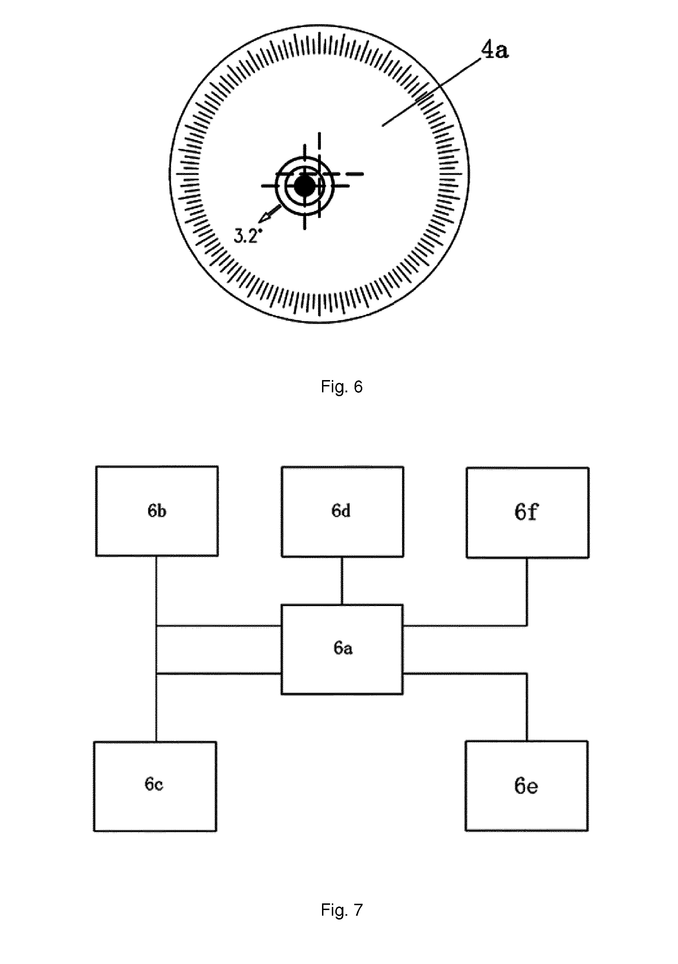

Referring to Fig. 7-Fig. 13, a three dimensional angle measuring device is provided, wherein the electronic circuit in the three dimensional angle measuring device includes a control circuit 6a, a power circuit 6b, a keying circuit 6c, a sensor module circuit 6d, a display module circuit 6e and a buzzing module circuit 6f.

The information processing module includes a microcontroller U₃ and a control circuit 6a, wherein the control circuit 6a includes a crystal oscillator Y, a switch K, a resistor 3 R₃, a resistor 4 R₄, a resistor 5 R₅, a resistor 6 R₆, a capacitor 6 C₆, a capacitor 7 C₇, a capacitor 8 C₈, a capacitor 9 C₉, a capacitor 14 C₁₄, a capacitor 15 C₁₅, a capacitor 16 C₁₆ and a capacitor 17 C₁₇, wherein one end of the switch K and one end of the capacitor 9 C₉ are connected with an anode output VDD of the circuit, the other end of the capacitor 9 C₉ is connected with a power cathode GND of the circuit, and the other end of the switch K is connected with the pin 1 of the microcontroller U₃. One end of the resistor 5 R₅ is connected with the anode input VBAT the circuit, the other end of the resistor 5 R₅ is connected with one end of the resistor 6 R₆ and the pin 2 of the microcontroller U₃, and the other end of the resistor 6 R₆ is connected to the cathode node AGND of the circuit. The pin 14 of the microcontroller U₃ and one end of the capacitor 6 C₆ are connected to the anode output VDD of the circuit, and the other end of the capacitor 6 C₆ is connected with the pin 15 of the microcontroller U₃ and the cathode node AGND of the circuit. The pin 17 of the microcontroller U₃ is respectively connected with one end of the capacitor 14 C₁₄ and one end of the crystal oscillator Y, and the other end of the capacitor 14 C₁₄ is connected to the power cathode GND of the circuit. The pin 18 of the microcontroller U₃ is respectively connected with one end of the capacitor 15 C₁₅ and the other end of the crystal oscillator Y, the other end of the capacitor 15 C₁₅ is connected to the power cathode GND in the circuit. The pin 21 of the microcontroller U₃ is connected with one end of the resistor 3 R₃, the other end of the resistor 3 R₃ is connected to the power cathode GND of the circuit, the pin 23 of the microcontroller U₃ is respectively connected with one end of the resistor 4 R₄ and one end of the capacitor 16 C₁₆. The other end of the resistor 4 R₄ and one end of the capacitor 17 C₁₇ are connected to the anode output VDD of the circuit, the other end of the capacitor 17 C₁₇ is connected to the power cathode GND of the circuit, and the other end of the capacitor 16 C₁₆ is connected with the pin 26 of the microcontroller U₃. The pin 32 of the microcontroller U₃ and one end of the capacitor 7 C₇ are connected with the anode output VDD in the circuit, and the other end of the capacitor 7 C₇ is connected with the power cathode GND of the circuit. The pin 48 of the microcontroller U₃ and one end of the capacitor 8 C₈ are connected with the anode output VDD of the circuit, and the other end of the capacitor 8 C₈ is connected with the power cathode GND of the circuit.

The power module includes a relay J, a voltage regulator module U₁ and a power circuit 6b, wherein the power circuit includes a capacitor1 C₁, a capacitor 2 C₂, a capacitor 3 C₃, a capacitor 4 C₄, a capacitor 5 C₅, a resistor 1 R₁, a resistor 2 R₂, a triode 1 Q₁ and a triode 2 Q₂. Wherein the triode 1 Q₁ is a MOS tube, and the capacitor1 C₁, the capacitor 4 C₄ and the capacitor 5 C₅ are electrolytic capacitors. The anode input VBAT node of the circuit is connected with the pin 1 of the relay J, the anode of the capacitor1 C₁, one end of the capacitor 2 C₂ and pins 1 and 3 of the voltage regulator module U₁. The cathode GND of the circuit is connected with the pin 2 of the relay J, the other end of the capacitor1 C₁, the other end of the capacitor 2 C₂, the pin 2 of the voltage regulator module U₁, one end of the capacitor 3 C₃ and the cathode of the capacitor 4 C₄. The anode output VDD of the circuit is connected with the pin 5 of the voltage regulator module U₁, the other end of the capacitor 3 C₃, the anode of the capacitor 4 C₄, one end of the resistor 1 R₁ and a source electrode of the triode 1 Q₁. The other end of the resistor 1 R₁ is connected with a grid of the triode 1 Q₁ and a collector electrode of the triode 2 Q₂, a drain electrode of the triode 1 Q₁ is connected with the anode output VCC of the circuit and the anode of the capacitor 5 C₅. The cathode of the capacitor 5 C₅ is grounded. A base electrode of the triode 2 Q₂ is connected with one end of the resistor 2 R₂. An emitter electrode of the triode 2 Q₂ is connected to the cathode GND of the circuit, and the other end of the resistor 2 R₂ is connected to the pin 3 of the microcontroller U₃.

The key module includes angle measurement function keys 3, calculator keys 5 and a keying circuit 6c, wherein the total number of the angle measurement function keys 3 and the calculator keys 5 are 26, including: key 1 SW₁-key 26 SW₂₆. The keying circuit are as follows: key 1 SW₁-key 26 SW₂₆ are arranged in a matrix form, wherein, ordered in row, one pin of key 1 SW₁-key 5 SW₅ are connected to a network KS0₁, one pin of key 6 SW₆-key 10 SW₁₀ are connected to a network KS0₂, one pin of key 11 SW₁₁-key 15 SW₁₅ are connected to a network KS0₃, one pin of key 16 SW₁₆-key 20 SW₂₀ are connected to a network KS0₄, one pin of key 21 SW₂₁-key 25 SW₂₅ are connected to a network KS0₅, and one pin of key 26 SW₂₆ is connected to a network KS0₆; and ordered in line, the other pin of key 1 SW₁, key 6 SW₆, key 11 SW₁₁, key 16 SW₁₆, key 21 SW₂₁ and key 26 SW₂₆ are connected to a network KS₁₁, the other pin of key 2 SW₂, key 7 SW₇, key 12 SW₁₂, key 17 SW₁₇ and key 22 SW₂₂ are connected to a network KS₁₂, the other pin of key 3 SW₃, key 8 SW₈, key 13 SW₁₃, key 18 SW₁₈ and key 23 SW₂₃ are connected to a network KS₁₃, the other pin of key 4 SW₄, key 9 SW₉, key 14 SW₁₄, key 19 SW₁₉ and key 24 SW₂₄ are connected to a network KS₁₄, and the other pin of key 5 SW₅, key 10 SW₁₀, key 15 SW₁₅, key 20 SW₂₀ and key 25 SW₂₅ are connected to a network KS₁₅. Networks KS₁₁-KS₁₅ are sequentially connected to the pins 4, 5, 6, 7 and 8 of the microcontroller U₃, respectively; networks KS₀₁-KS₁₅ are sequentially connected to the pins 4, 5, 6, 7 and 8 of the microcontroller U₃, respectively; and networks KS01-KS06 are respectively connected to the pins 9, 10, 11, 12, 13 and 16 of the microcontroller U₃.

The sensor module includes a sensor chip U₂ and a sensor module circuit 6d, wherein the sensor module circuit are as follows: pins 1 and 10 of the sensor chip U₂ are connected to the power anode output VCC, the pin 3 of the sensor chip U₂ is connected to the pin 55 of the microcontroller U₃, pins 4, 7 and 9 of the sensor chip U₂ are connected to the power cathode GND of the circuit, the pin 5 of the sensor chip U₂ is connected to the pin 54 of the microcontroller U₃, the pin 6 of the sensor chip U₂ is connected to the pin 53 of the microcontroller U₃, and the pin 8 of the sensor chip U₂ is connected to the pin 19 of the microcontroller U₃.

The sensor chip U₂ is a three-axis angle sensor, and an internal collector can collect analog quantities in X, Y and Z axes direction after the three-axis angle sensor U₂ is turned over, and the analog quantities are converted to digital quantities by an internal converter, for measuring angles.

The display module includes a liquid crystal display LCD, a first liquid crystal display drive integrated chip U₄, a second liquid crystal display drive integrated chip U₅ and a display module circuit 6e. Wherein the liquid crystal display LCD includes a first liquid crystal display window 4a and a second liquid crystal display window 4b, the display module circuit includes a capacitor 10 C₁₀, a capacitor 11 C₁₁, a capacitor 12 C₁₂ and a capacitor 13 C₁₃; wherein, pins 1-4 of the liquid crystal display LCD are respectively connected to pins 37, 36, 35 and 34 of the microcontroller U₃, the pin 5 of the liquid crystal display LCD is connected to one end of the capacitor 11 C₁₁ and the power cathode GND of the circuit, the pin 6 of the liquid crystal display LCD is connected to the other end of the capacitor 11 C₁₁ and the power anode output VCC, pins 7-10 of the liquid crystal display LCD are respectively connected to pins 64, 63, 62 and 61 of the microcontroller U₃, the pin 15 of the liquid crystal display LCD is connected to the anode input VBAT node, pins 16-18 of the liquid crystal display LCD are respectively connected to pins 6, 5 and 4 of the first liquid crystal display drive integrated chip U₄, pins 6 and 5 of the second liquid crystal display drive integrated chip U₅ are respectively connected to pins 19 and 20 of the liquid crystal display LCD, the pin 22 of the liquid crystal display LCD is connected to the pin 33 of the microcontroller U₃, pins 23-30 of the liquid crystal display LCD are respectively connected to pins 46, 45, 44, 43, 42, 41, 40 and 39 of the microcontroller U₃, the pin 31 of the liquid crystal display LCD is respectively connected to the pin 60 of the microcontroller U₃, the pin 32 of the liquid crystal display LCD is connected to the power anode output VCC, the pin 33 of the liquid crystal display LCD and one end of the capacitor 13 C₁₃, the other end of the capacitor 13 C₁₃ is connected to the power cathode GND of the circuit and the pin 34 of the liquid crystal display LCD, and pins 35, 36 and 37 of the liquid crystal display LCD are respectively connected to pins 29, 30 and 31 of the microcontroller U₃. One end of the capacitor 10 C₁₀ is connected to the power anode output VCC and the pin 1 of the first liquid crystal display drive integrated chip U₄, the other end of capacitor 10 C₁₀ is connected to the power cathode GND of the circuit and the pin 2 of the first liquid crystal display drive integrated chip U₄, the pin 3 of the first liquid crystal display drive integrated chip U₄ is connected to the pin 3 of the second liquid crystal display drive integrated chip U₅ and the pin 59 of the microcontroller U₃. One end of the capacitor 12 C₁₂ is connected to the power anode output VCC and the pin 1 of the second liquid crystal display drive integrated chip U₅, and the other end of the capacitor 12 C₁₂ is connected to the power cathode GND in the circuit and the pin 2 of the second liquid crystal display drive integrated chip U₅.

The buzzing module includes a buzzer DZ and a buzzing module circuit 6f, wherein the buzzing module circuit includes a triode 3 Q₃ and a resistor 7 R₇, wherein, one end of the buzzer DZ is connected to the anode input VBAT node, the other end of the buzzer DZ is connected to the collector electrode of the triode 3 Q₃, the emitter electrode of the triode 3 Q₃ is connected to the power cathode GND of the circuit, the base electrode of the triode 3 Q₃ is connected to one end of the resistor 7 R₇, and the other end of the resistor 7 R₇ is connected to the pin 52 of the microcontroller U₃.

Operating principles of the three dimensional angle measuring device are as follows: The three dimensional angle measuring device supplies power for the whole system by batteries, the sensor chipU₂ collects angle signals, the information processing module calculates the present angle and sends the present angle to the liquid crystal display LCD for displaying; during measurement, when the three dimensional angle measuring device rotates to 0°, 45° and 90°, the buzzer will sound, so as to prompt users.

## Claims

1. A three dimensional angle measuring device, including a housing, a key module, a power module, a display module, an information processing module, a buzzing module and a sensor module, wherein the power module is connected with the information processing module and the key module, the information processing module is connected with the key module, the display module, the buzzing module and the sensor module.

2. The three dimensional angle measuring device according to claim 1, wherein, two horizontal datum planes are set on the housing, wherein, a first horizontal datum plane is on the left side of the housing, and a second horizontal datum plane is on the back of the housing.

3. The three dimensional angle measuring device according to claim 2, wherein, the power module includes a relay (J), a voltage regulator module (U₁) and a power circuit (6b).

4. The three dimensional angle measuring device according to claim 3, wherein, the key module includes an angle measurement function keys (3), a calculator keys (5) and a keying circuit (6c).

5. The three dimensional angle measuring device according to claim 4, wherein, the sensor module includes a sensor module circuit (6d) and a sensor chip (U₂).

6. The three dimensional angle measuring device according to claim 5, wherein, the buzzing module includes a buzzer (DZ) and a buzzing module circuit (6f).

7. The three dimensional angle measuring device according to claim 6, wherein, the information processing module includes a microcontroller U₃ and a control circuit (6a), wherein the control circuit (6a) includes a crystal oscillator (Y), a switch (K), a resistor 3 (R₃), a resistor 4 (R₄), a resistor 5 (R₅), a resistor 6 (R₆), a capacitor 6 (C₆), a capacitor 7 (C₇), a capacitor 8 (C₈), a capacitor 9 (C₉), a capacitor 14 (C₁₄), a capacitor 15 (C₁₅), a capacitor 16 (C₁₆) and a capacitor 17 (C₁₇), wherein one end of the switch (K) and one end of the capacitor 9 (C₉) are connected with the anode output VDD of the circuit, the other end of the capacitor 9 (C₉) is connected with the power cathode GND of the circuit, and the other end of the switch (K) is connected with the pin 1 of the microcontroller (U₃); one end of the resistor 5 (R₅) is connected with the anode input VBAT of the circuit, the other end of the resistor 5 (R₅) is connected with one end of the resistor 6 (R₆) and the pin 2 of the microcontroller (U₃), and the other end of the resistor 6 (R₆) is connected to the cathode node AGND of the circuit; the pin 14 of the microcontroller (U₃) and one end of the capacitor 6 (C₆) are connected to the anode output VDD of the circuit, and the other end of the capacitor 6 (C₆) is connected with the pin 15 of the microcontroller (U₃) and the cathode node AGND of the circuit; the pin 17 of the microcontroller (U₃) is respectively connected with one end of the capacitor 14 (C₁₄) and one end of the crystal oscillator (Y), and the other end of the capacitor 14 (C₁₄) is connected to the power cathode GND of the circuit; the pin 18 of the microcontroller (U₃) is respectively connected with one end of the capacitor 15 (C₁₅) and the other end of the crystal oscillator (Y), the other end of the capacitor 15 (C₁₅) is connected to the power cathode GND in the circuit, a pin 21 of the microcontroller (U₃) is connected with one end of the resistor 3 (R₃), the other end of the resistor 3 (R₃) is connected to the power cathode GND of the circuit, the pin 23 of the microcontroller (U₃) is respectively connected with one end of the resistor 4 (R₄) and one end of the capacitor 16 (C₁₆), the other end of the resistor 4 (R₄) and one end of the capacitor 17 (C₁₇) are connected to the anode output VDD of the circuit, the other end of the capacitor 17 (C₁₇) is connected to the power cathode GND of the circuit, and the other end of the capacitor 16 (C₁₆) is connected with the pin 26 of the microcontroller (U₃; the pin 32 of the microcontroller (U₃) and one end of the capacitor 7 (C₇) are connected with the anode output VDD of the circuit, and the other end of the capacitor 7 (C₇) is connected with the power cathode GND of the circuit; the pin 48 of the microcontroller (U₃) and one end of the capacitor 8 (C₈) are connected with the anode output VDD of the circuit, and the other end of the capacitor 8 (C₈) is connected with the power cathode GND of the circuit.

8. The three dimensional angle measuring device according to claim 7, wherein, the power module includes a relay (J), a voltage regulator module (U₁) and a power circuit (6b), wherein the power circuit (6b) includes a capacitor1 (C₁), a capacitor 2 (C₂), a capacitor 3 (C₃), a capacitor 4 (C₄), a capacitor 5 (C₅), a voltage regulator module (U₁), a resistor 1 (R₁), a resistor 2 (R₂), a triode 1 (Q₁) and a triode 2 (Q₂), wherein the triode 1 (Q₁) is a MOS tube, and the capacitor1 (C₁), the capacitor 4 (C₄) and the capacitor 5 (C₅) are electrolytic capacitors; the anode input (VBAT) node of the circuit is connected with the pin 1 of the relay (J), the anode of the capacitor1 (C₁), one end of the capacitor 2 (C₂) and pins 1 and 3 of the voltage regulator module (U₁); the cathode (GND) of the circuit is connected with the pin 2 of the relay (J), the other end of the capacitor1 (C₁), the other end of the capacitor 2 (C₂), the pin 2 of the voltage regulator module (U₁), one end of the capacitor 3 (C₃) and the cathode of the capacitor 4 (C₄); the anode output VDD of the circuit is connected with the pin 5 of the voltage regulator module (U₁), the other end of the capacitor 3 (C₃), the anode of the capacitor 4 (C₄), one end of the resistor 1 (R₁) and a source electrode of the triode 1 (Q₁); the other end of the resistor 1 (R₁) is connected with a grid of the triode 1 (Q₁) and a collector electrode of the triode 2 (Q₂), a drain electrode of the triode 1 (Q₁) is connected with the anode output VCC of the circuit and the anode of the capacitor 5 (C₅), the cathode of the capacitor 5 (C₅) is grounded, a base electrode of the triode 2 (Q₂) is connected with one end of the resistor 2 (R₂), an emitter electrode of the triode 2 (Q₂) is connected to the cathode GND of the circuit, and the other end of the resistor 2 (R₂) is connected to the pin 3 of the microcontroller (U₃).

9. The three dimensional angle measuring device according to claim 4, wherein, the key module includes angle measurement function keys 3, calculator keys 5 and a keying circuit (6c), wherein the total number of the angle measurement function keys 3 and the calculator keys 5 are 26, including: key 1 (SW₁)-key 26 (SW₂₆), the keying circuit (6c) are as follows: key 1 (SW₁)-key 26 (SW₂₆) are arranged in a matrix form, wherein, ordered in row, one pin of key 1 (SW₁)-key 5 (SW₅) are connected to a network (KS0₁), one pin of key 6 (SW₆)-key 10 (SW₁₀) are connected to a network (KS0₂), one pin of key 11 (SW₁₁)-key 15 (SW₁₅) are connected to a network (KS0₃), one pin of key 16 (SW₁₆)-key 20 (SW₂₀) are connected to a network (KS0₄), one pin of key 21 (SW₂₁)-key 25 (SW₂₅) are connected to a network (KS0₅), and one pin of key 26 (SW₂₆) is connected to a network (KS0₆); ordered in line, the other pin of key 1 (SW₁), key 6 (SW₆), key 11 (SW₁₁), key 16 (SW₁₆), key 21 (SW₂₁) and key 26 (SW₂₆) are connected to a network (KS₁₁), the other pin of key 2 (SW₂), key 7 (SW₇), key 12 (SW₁₂), key 17 (SW₁₇) and key 22 (SW₂₂) are connected to a network (KS₁₂), the other pin of key 3 (SW₃), key 8 (SW₈), key 13 (SW₁₃), key 18 (SW₁₈) and key 23 (SW₂₃) are connected to a network (KS₁₃), the other pin of key 4 (SW₄), key 9 (SW₉), key 14 (SW₁₄), key 19 (SW₁₉) and key 24 (SW₂₄) are connected to a network (KS₁₄), and the other pin of key 5 (SW₅), key 10 (SW₁₀), key 15 (SW₁₅), key 20 (SW₂₀) and key 25 (SW₂₅) are connected to a network (KS₁₅); networks (KS₁₁)- (KS₁₅) are sequentially connected to the pins 4, 5, 6, 7 and 8 of the microcontroller (U₃), respectively; networks (KS₀₁)-(KS₁₅) are sequentially connected to the pins 4, 5, 6, 7 and 8 of the microcontroller (U₃), respectively; and networks (KS01)- (KS06) are respectively connected to the pins 9, 10, 11, 12, 13 and 16 of the microcontroller (U₃).

10. The three dimensional angle measuring device according to claim 9, wherein, the sensor module includes a sensor chip (U₂) and a sensor module circuit (6d), wherein, the sensor module circuit are as follows: pins 1 and 10 of the sensor chip (U₂) are connected to the power anode output VCC, the pin 3 of the sensor chip (U₂) is connected to the pin 55 of the microcontroller (U₃), pins 4, 7 and 9 of the sensor chip (U₂) are connected to the power cathode GND of the circuit, the pin 5 of the sensor chip (U₂) is connected to the pin 54 of the microcontroller (U₃), the pin 6 of the sensor chip (U₂) is connected to the pin 53 of the microcontroller (U₃), and the pin 8 of the sensor chip (U₂) is connected to the pin 19 of the microcontroller (U₃).

11. The three dimensional angle measuring device according to claim 10, wherein, the sensor chip (U₂) is a three-axis angle sensor.

12. The three dimensional angle measuring device according to claim 10, wherein, the display module includes a liquid crystal display (LCD), a first liquid crystal display drive integrated chip (U₄), a second liquid crystal display drive integrated chip (U₅) and a display module circuit (6e), wherein the liquid crystal display (LCD) includes a first liquid crystal display window (4a) and a second liquid crystal display window (4b), the display module circuit (6e) includes a capacitor 10 (C₁₀), a capacitor 11 (C₁₁), a capacitor 12 (C₁₂) and a capacitor 13 (C₁₃); wherein, pins 1-4 of the liquid crystal display (LCD) are respectively connected to pins 37, 36, 35 and 34 of the microcontroller (U₃), the pin 5 of the liquid crystal display (LCD) is connected to one end of the capacitor 11 (C₁₁) and the power cathode (GND) of the circuit, the pin 6 of the liquid crystal display (LCD) is connected to the other end of the capacitor 11 (C₁₁) and the power anode output VCC, pins 7-10 of the liquid crystal display (LCD) are respectively connected to pins 64, 63, 62 and 61 of the microcontroller (U₃), the pin 15 of the liquid crystal display (LCD) is connected to the anode input VBAT node, pins 16-18 of the liquid crystal display (LCD) are respectively connected to pins 6, 5 and 4 of the first liquid crystal display drive integrated chip (U₄), pins 6 and 5 of the second liquid crystal display drive integrated chip (U₅) are respectively connected to pins 19 and 20 of the liquid crystal display (LCD), the pin 22 of the liquid crystal display (LCD) is connected to the pin 33 of the microcontroller (U₃), pins 23-30 of the liquid crystal display (LCD) are respectively connected to pins 46, 45, 44, 43, 42, 41, 40 and 39 of the microcontroller (U₃), the pin 31 of the liquid crystal display (LCD) is respectively connected to the pin 60 of the microcontroller (U₃), the pin 32 of the liquid crystal display (LCD) is connected to the power anode output VCC, the pin 33 of the liquid crystal display (LCD) and one end of the capacitor 13 (C₁₃), the other end of the capacitor 13 (C₁₃) is connected to the power cathode GND of the circuit and the pin 34 of the liquid crystal display (LCD), and pins 35, 36 and 37 of the liquid crystal display (LCD) are respectively connected to pins 29, 30 and 31 of the microcontroller (U₃); one end of the capacitor 10 (C₁₀) is connected to the power anode output VCC and the pin 1 of the first liquid crystal display drive integrated chip (U₄), the other end of capacitor 10 (C₁₀) is connected to the power cathode GND of the circuit and the pin 2 of the first liquid crystal display drive integrated chip (U₄), the pin 3 of the first liquid crystal display drive integrated chip (U₄) is connected to the pin 3 of the second liquid crystal display drive integrated chip (U₅) and the pin 59 of the microcontroller (U₃); one end of the capacitor 12 (C₁₂) is connected to the power anode output VCC and the pin 1 of the second liquid crystal display drive integrated chip (U₅), and the other end of the capacitor 12 (C₁₂) is connected to the power cathode GND of the circuit and the pin 2 of the second liquid crystal display drive integrated chip (U₅).

13. The three dimensional angle measuring device according to claim 12, wherein, the buzzing module includes a buzzer (DZ) and a buzzing module circuit (6f), wherein the buzzing module circuit (6f) includes a triode 3 (Q₃) and a resistor 7 (R₇), wherein, one end of the buzzer (DZ) is connected to the anode input VBAT node, the other end of the buzzer (DZ) is connected to the collector electrode of the triode 3 (Q₃), the emitter electrode of the triode 3 (Q₃) is connected to the power cathode GND) of the circuit, the base electrode of the triode 3 (Q₃) is connected to one end of the resistor 7 (R₇), and the other end of the resistor 7 (R₇) is connected to the pin 52 of the microcontroller (U₃).
